## Europäisches Patentamt

## European Patent Office

## Office européen des brevets

(11) Veröffentlichungsnummer: **0 098 955**
**B1**

(12) **EUROPÄISCHE PATENTSCHRIFT**

(45) Veröffentlichungstag der Patentschrift:
**19.04.89**

(21) Anmeldenummer: **83105366.5**

(22) Anmeldetag: **31.05.83**

(51) Int. Cl.⁴: **G 06 K 7/10**

(54) Verfahren zum Lesen von Strichcodes.

(30) Priorität: **15.07.82 DE 3226385**

(43) Veröffentlichungstag der Anmeldung:
**25.01.84 Patentblatt 84/4**

(45) Bekanntmachung des Hinweises auf die Patenterteilung:
**19.04.89 Patentblatt 89/16**

(84) Benannte Vertragsstaaten:
**AT BE CH FR GB IT LI LU NL SE**

(56) Entgegenhaltungen:
**CH-A-483 065**
**FR-A-2 146 776**
**US-A-3 716 699**
**US-A-3 798 458**
**US-A-4 146 782**

**IBM TECHNICAL DISCLOSURE BULLETIN, Band 15,
Nr. 6, November 1972, Seiten 1816-1817, New York,
US; J.B. DAVIS et al.: "Velocity calibrating
scanner"**

(73) Patentinhaber: **Deutsche Thomson- Brandt GmbH,
Hermann- Schwer- Strasse 3 Postfach 1307,
D-7730 Villingen- Schwenningen (DE)**

(72) Erfinder: **Eigeldinger, Norbert, Tulpenstrasse 8,
D-7730 VS- Pfaffenweiler (DE)**
Erfinder: **Otto, Bernhard, Überruckweg 13, D-7730
VS- Rietheim (DE)**

## Beschreibung

Die Erfindung bezieht sich auf ein Verfahren zum Lesen von Strichcodes. Diese Strichcodes bestehen aus einer Aufeinanderfolge von unterschiedlich breiten schwarzen und weißen Streifen. Hierin sind Digitalinformationen enthalten. So sind z. B. die Code-Streifen auf den Warenpackungen bekannt, in denen Informationen über Warenart, Artikel-Nummer, Preis usw. enthalten sind. Sie können mit Hilfe eines Leseabtasters ausgelesen und in einer Computeranlage verarbeitet werden, so daß z. B. Rechnungen ausgedruckt und der Lagerbestand jederzeit abefragt werden kann.

Derartige Strichcodes eignen sich auch, um in Programmzeitschriften Daten über Fernseh- und Rundfunksendungen zu speichern, die mit Hilfe eines Abtasters ausgelesen werden können, um z. B. die Daten über das Programm - sowie über die Ein- und Ausschaltzeitpunkte in einen Videorecorder einzuspeichern. Auf diese Weise wird das Programmieren derartiger Geräte wesentlich erleichtert. Hierbei bestehen jedoch mehrere Schwierigkeiten. Für einen ungeübten Benutzer einer solchen Leseeinheit zum Einspeichern in einen Videorecorder ist die richtige Erkennung des Codes davon abhängig, mit welcher Geschwindigkeit er diesen Strichcode mit dem Abtaster überstreicht. Andererseits ist der Strichcode bei schlechter Papierqualität, bei welcher die schwarz-weiß Balken nicht kontrastreich herauskommen, drucktechnisch nur dadurch einigermaßen leserlich aufzubringen, wenn die sogenannte Modulbreite, das ist die Breite der kleinsten Informationseinheit, vergrößert wird. Das bedeutet jedoch ein breiteres Strichmuster. Unterschiedliche Modulbreiten jedoch beeinträchtigen das eindeutige Auslesen des Strichcodes ebenfalls.

## Aufgabe

Der Erfindung liegt deshalb die Aufgabe zugrunde, ein Verfahren zu finden, welches unter den verschiedensten Bedingungen den Code jeweils fehlerfrei erkennt. Die gestellte Aufgabe wird durch die im Patentanspruch gekennzeichnete Maßnahme gelöst.

## Beschreibung

Nachstehend soll mit Hilfe der Zeichnung die Erfindung näher erläutert werden.

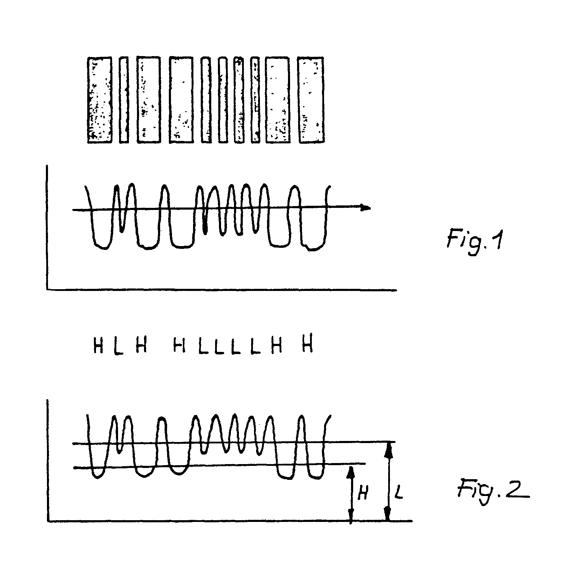

Die Figuren 1 und 2 stellen die Ausgangssignale der bekannten verschiedenen Verfahren dar.

Zum Auslesen von Stichcodes gibt es zwei bekannte Verfahren, ein zeitabhängiges (vgl. IBM, Technical Disclosure Bulletin, Bd. 15, Nr. 6, Nov. 1972, Seiten 1816 - 1817) und ein pegelabhängiges (vgl. FR-A-2 146 776, US-A-3 798 458) Verfahren.

Der Strichcode setzt sich z. B. aus Strichen zusammen von weißen Streifen bestimmter Breite und von schwarzen Streifen der gleichen Breite und schwarzen streifen mit einem Vielfachen dieser Breite. Beim erstgenannten Verfahren dient die konstante Weiß-Breite zur Messung für die Geschwindigkeit. Die Weiß-Breite dient als Referenz für die Schwarzlaufzeit. Wenn z. B. der doppelte Wert der Weiß-Laufzeit als Referenzzeit genommen wird, so kann durch Vergleich der Schwarz-Laufzeit mit dieser Referenzzeit festgestellt werden, ob es sich um ein H-Signal (Scwarz-Laufzeit größer als die Referenzzeit) oder ein L-Signal (Schwarz-Laufzeit kleiner als die Referenzzeit) handelt. Dadurch ist es möglich, große Geschwindigkeitsvariationen innerhalb eines Codes zuzulassen. Dieses Verfahren besitzt den Vorteil, daß es unabhängig von der Modulbreite des Code-Signals ist. Es besitzt jedoch den Nachteil, daß die Lesegeschwindigkeit nach unten begrenzt ist.

In Figur 1 ist unter dem Strichcode der Verlauf der Lesesignale aufgezeichnet. Es sind hierbei deutlich die breiten und schmalen Balken zu erkennen. Das Pegelverfahren arbeitet mit zwei festen Vergleichschwellen für das H- und das L-Signal (Figur 2). Der Vorteil dieses Leseverfahrens besteht in der Unabhängigkeit von der Lesegeschwindigkeit, was für die Anwendung durch ungeübte Benutzer wichtig sein kann. Andererseits hat dieses zweite Verfahren wieder den Nachteil der Abhängigkeit von der Modulbreite des Strichcodes, die aus den weiter oben genannten Gründen verändert werden muß.

Es ergibt sich aus den vorherigen Ausführungen demnach, daß der Vorteil des jeweils einen Verfahrens der Nachteil des jeweils anderen Verfahrens ist. Bei der Anwendung der Maßnahmen zur Lösung der der Erfindung zugrunde liegenden Aufgabe ergibt sich jedoch, daß man die Summe der Vorteile der beiden Verfahren erhält ohne die einzelnen Nachteile in Kauf nehmen zu müssen. Bei dem abschließenden Vergleich, welches Verfahren bei dem Auslesen das richtige Signal liefert, wird die Tatsache ausgenutzt, daß ein Code als richtig erkannt wird, wenn z. B. die Anzahl der Striche, die konstant ist, stimmt und wenn der Inhalt des Zeichens sinnvoll, d. h in einer Code-Tabelle enthalten ist, und wenn die Anzahl der Prüfbits stimmt.

Der Vorteil des angemeldeten Verfahrens besteht darin, daß ohne Zusatzinformation verschiedene Modulbreiten verwendet werden können, wobei bei Verwendung der bevorzugten Modulbreite automatisch die Vorteile des Pegelverfahrens, d.h. eine Unabhängigkeit von der Lesegeschwindigkeit erreicht wird.

**Patentanspruch**

Verfahren zum Lesen von Strichcodes in Form von unterschiedlich breiten Streifen unterschiedlichen Kontrastes, wobei eine Information in der Aufeinanderfolge der Breite dieser Streifen digital enthalten ist, <u>dadurch gekennzeichnet</u>, daß der Strichcode gleichzeitig oder hintereinander nach dem Zeitverfahren, d.h. Messung der Strichstärken bei annähernd gleicher Lesegeschwindigkeit und nach dem Pegelverfahren, d h. Messung der von dem Leser in Abhängigkeit der Strichstärken abgegebenen Pegel ausgelesen wird, wobei noch Überprüfung der beiden ausgelesenen Signale auf Richtigkeit das jeweils genauere ausgewertet wird.

**Claim**

Process for reading bar codes in the form of bands of different widths and of different contrast, wherein information is digitally contained in the sequence of widths of these bands, characterised in that the bar code is read, simultaneously or one after the other, according to the time process, i.e. measurement of the bar widths with approximately equal reading speed, and according to the level process, i.e. measurement of the levels generated by the reader depending on the bar widths, wherein after testing the two signals read for correctness, the more exact of the two is evaluated

**Revendications**

Procédé pour lire des codes à barres sous la forme de bandes possédant des largeurs différentes et présentant des contrastes différents, une information étant contenue sous forme numérique dans la succession des largeurs de ces bandes, caractérisé en ce que le code à barres est lu simultanément ou successivement selon le procédé faisant intervenir le temps, à savoir la mesure des épaisseurs des traits pour une vitesse de lecture approximativement constante, et selon le procédé fonctionnant sur la base de niveaux, c'est-à-dire la mesure des niveaux délivrés par le lecteur en fonction des épaisseurs des traits, auquel cas après vérification du caractère correct des deux signaux lus, le signal le plus précis est exploité.

Fig.1

H L H  H LLLLH H

Fig. 2